**Europäisches Patentamt**

**European Patent Office**

**Office européen des brevets**

(19)

(11) Publication number : **0 448 070 B1**

(12) **EUROPEAN PATENT SPECIFICATION**

(45) Date of publication of patent specification :
**15.06.94 Bulletin 94/24**

(51) Int. Cl.⁵ : **A01N 63/00,** // (A01N63/00,
57:12)

(21) Application number : **91104322.2**

(22) Date of filing : **20.03.91**

(54) **Insecticidal composition based on Bacillus thuringiensis.**

(30) Priority : **21.03.90 IT 1975190**

(43) Date of publication of application :
**25.09.91 Bulletin 91/39**

(45) Publication of the grant of the patent :
**15.06.94 Bulletin 94/24**

(84) Designated Contracting States :
**DE ES FR GB NL**

(56) References cited :
**EP-A- 0 068 297
EP-A- 0 216 481
EP-A- 0 216 481
CA-A- 1 259 910
JOURNAL OF ECONOMIC ENTOMOLOGY, vol.
75, no. 3, June 1982, pages 472-476,
College Park, Maryland, US; D.B. SMITH et al.:
"Laboratory and fieldevaluations of
pathogen-adjuvant treatments"
INFECTION AND IMMUNITY, vol. 55, no. 5,
May 1987, pages 1300-1308, AmericanSociety
for Microbiology; S.S. GILL et al.: "Cell mem-
brane interaction ofBacillus thuringiensis
subsp. israelensis cytolytic toxins"**

(73) Proprietor : **MINISTERO DELL' UNIVERSITA' E
DELLA RICERCA SCIENTIFICA E
TECNOLOGICA
76, Lungotevere Thaon de Revel
I-00196 Roma (IT)**

(72) Inventor : **Degetto, Angelo, Dr.
8, Via Cal Di Mezzo
I-31051 Follina, Treviso (IT)**
Inventor : **Cappai, Andrea, Dr.
1317, Via S. Croce
I-30125 Venezia (IT)**
Inventor : **Caprioli, Vincenzo, Dr.
8, Via Loriga
I-27028 San Martino Siccomario, Pavia (IT)**

(74) Representative : **Barz, Peter, Dr. et al
Patentanwälte Dipl.-Ing. G. Dannenberg
Dr. P. Weinhold, Dr. D. Gudel
Dipl.-Ing. S. Schubert, Dr. P. Barz
Siegfriedstrasse 8
D-80803 München (DE)**

EP 0 448 070 B1

## Description

The present invention relates to insecticidal compositions based on <u>Bacillus thuringiensis</u> and containing at least one phospholipid.

At present, in both agricultural and sanitary fields, the insecticides of microbial nature have shown to be considerably interesting. Among these, particularly interesting are the insecticides deriving from entomopathogen bacterium <u>Bacillus thuringiensis</u> in its known varieties.

<u>Bacillus thuringiensis</u>, in the form of the biomass derived from its cultures, which biomass is constituted by toxins, metabolites and spores, is a natural product which, when used as an insecticide, shows the following advantages: innocuosness for warm-blooded animals, absence of phytotoxicity, it does not result to be an environmental pollutant either as such or through its degradation products, and furthermore shows a high selectivity towards the species of insects to be fought.

In the insecticidal compositions which contain it, <u>Bacillus thuringiensis</u> is generally used in the form of its biomass, which is in either powder or liquid form, according to the method used to separate it from the fermentation medium (such as, e.g., filtration, centrifugation, lyophilization).

The present applicant has found now that the insecticidal activity of <u>Bacillus thuringiensis</u> or of its toxin is considerably increased when they are used in combination with at least one phospholipid. It was furthermore found that the insecticidal activity of the combination constituted by the <u>Bacillus thuringiensis</u> and phospholipid can be further increased with the use of special anionic surfactants.

The object of the present invention are therefore insecticidal compositions containing <u>Bacillus thuringiensis</u> (Bth), or only its toxin, and at least one phospholipid, preferably in a weight ratio of Bth or toxin thereof to the phospholipid comprised within the range of from 1:0.2 to 1:5 and, optionally, an anionic surfactant selected from esters of fatty acids ($C_{10}$-$C_{20}$) with glycerol or sorbitol, optionally ethoxylated, preferably in a weight ratio of Bth or its toxin to the surfactant comprised within the range of from 1:0.2 to 1:5.

As the <u>Bacillus thuringiensis</u>, any variety thereof endowed with insecticidal activity, such as, e.g., donegani NCIMB 40152, kurstaki, san diego and tenebrionis varieties, can be used.

The phospholipids which can be used according to the present invention are selected from one or more of the following phospholipids: phosphatidylcholine, phosphatidylethanolamine, phosphatidylinositol, phosphatidylglycerol. Furthermore, substances of natural origin with high contents of phospholipids, such as soy lecithin, as well as their hydrogenated, hydroxylated or ethoxylated derivatives, can be used.

The insecticidal compositions may contain the usual additives employed in the art, such as wetting agents, dispersing agents, solvents, inert fillers, stabilizer agents, preservants, and may be formulated in the most suitable way, e.g., as wettable powders, concentrated suspensions, according to the application they are destined to.

For practical uses in agriculture, suitable dosages, as referred to the biomass of <u>Bacillus thuringiensis</u> or to its toxin, are comprised in general within the range of from 0.05 to 4 kg/hectare.

The following examples are supplied to illustrate the invention.

<u>Examples 1-12</u>

Aqueous suspensions were prepared, which contained 0.2 g/litre of lyophilized biomass of <u>Bacillus thuringinesis</u> donegani (NCIMB 40152) variety or kurstaki variety, and variable amounts of phospholipids and surfactants, as indicated in Tables 1 and 2.

The insecticidal activity of water-suspended compositions based on <u>Bacillus thuringiensis</u> donegani variety was evaluated on 2nd-stage larvae of Colorado potato beetle (<u>Leptinotarsa decemlineata</u>), infesting young potato plants; the activity of compositions based on <u>Bacillus thuringiensis</u> kurstaki variety was evaluated on 2nd-stage larvae of pyralid (<u>Ostrinia nubilalis</u>) on corn leaves. The activity was expressed as the percent death rate of larvae observed after 72 hours of the treatment, which was carried out by the dipping technique, with the aerial portion of the plants being dipped into the insecticidal suspensions under investigation.

The following Tables report the results of the tests carried out. In the Tables:

LECITHIN 1 = soy lecithin with a high content of phospholipids (95%);
LECITHIN 2 = soy lecithin with a high content of phospholipids (95%), and hydroxylated;
SURFACTANT 1 = Sorbitan monooleate ethoxylated with 20 moles of ethylene oxide (EO);
SURFACTANT 2 = Castor oil ethoxylated with 25 moles of EO.

Table 1

| Example number | 1 | 2 | 3 | 4 | 5 | 6 | 7 | 8 | 9 |
|---|---|---|---|---|---|---|---|---|---|
| Suspension components | Contents, g / l | | | | | | | | |
| Lyophilized Bth. donegani | 0.20 | 0.20 | 0.20 | 0.20 | 0.20 | 0.20 | 0.20 | 0.20 | 0.20 |
| Lecithin 1 | – | 0.09 | 0.15 | 0.24 | – | – | – | 0.15 | 0.15 |
| Lecithin 2 | – | – | – | – | 0.09 | 0.15 | 0.24 | – | – |
| Surfactant 1 | – | – | – | – | – | – | – | 0.15 | – |
| Surfactant 2 | – | – | – | – | – | – | – | – | 0.15 |
| Percent activity on Leptinotarsa decemlineata | 42 | 51 | 75 | 60 | 48 | 68 | 60 | 87 | 82 |

EP 0 448 070 B1

## Table 2

| Example No. | 10 | 11 | 12 |
|---|---|---|---|
| Components of the suspension | | Contents, g/l | |
| Lyophilized Bth. kurstaki | 0.20 | 0.20 | 0.20 |
| Lecithin 1 | – | 0.15 | 0.15 |
| Surfactant 1 | – | – | 0.15 |
| Activity % on Ostrinia nubilalis | 28 | 50 | 52 |

## Claims

1. Insecticidal compositions comprising:
   (a) biomass of Bacillus thuringiensis, or only its toxin, and
   (b) one or more phospholipids or a substance with a high phospholipid content.

2. Insecticidal compositions according to claim 1, in which the weight ratio of (a), computed as dry substance, to (b), is comprised within the range of from 1:0.2 to 1:5.

3. Insecticidal compositions according to claim 1 or 2, furthermore containing at least one anionic surfactant selected from esters of fatty acids ($C_{10}$-$C_{20}$) with optionally ethoxylated glycerol or sorbitol.

4. Insecticidal composition according to claim 3, in which the weight ratio of the biomass of Bacillus thuringiensis or its toxin to said surfactants is comprised within the range of from 1:0.2 to 1:5.

5. Insecticidal compositions according to any one of claims 1-4, in which Bacillus thuringiensis is selected from donegani, kurstaki, san diego and tenebrionis varieties.

6. Insecticidal compositions according to any one of claims 1-5, in which the phospholipids are selected from phosphatidylcholine, phosphatidylethanolamine, phosphatidylinositol, phosphatidylglycerol, and their hydrogenated, hydroxylated and ethoxylated derivatives.

7. Insecticidal compositions according to any one of claims 1-5, in which the substance with a high phospholipid content is soy lecithin, or its derivatives.

8. The use of a composition according to any one of claims 1-7 for combatting insects.

## Patentansprüche

1. Insektizide Zusammensetzungen, umfassend:
   a) Biomasse von Bacillus thuringiensis oder nur dessen Toxin und
   b) eines oder mehrere Phospholipide oder eine Substanz mit einem hohen Phospholipid-Gehalt.

2. Insektizide Zusammensetzungen nach Anspruch 1, in denen das Gewichtsverhältnis von (a), berechnet als Trockensubstanz, zu (b) im Bereich von 1:0,2 bis 1:5 liegt.

3. Insektizide Zusammensetzungen nach Anspruch 1 oder 2, die weiter mindestens ein anionisches Tensid, das aus Estern von Fettsäuren ($C_{10}$-$C_{20}$) mit gegebenenfalls ethoxyliertem Glycerin oder Sorbit ausgewählt ist, enthalten.

4. Insektizide Zusammensetzungen nach Anspruch 3, in denen das Gewichtsverhältnis der Biomasse von Bacillus thuringiensis oder dessen Toxin zu diesen Tensiden im Bereich von 1:0,2 bis 1:5 liegt.

**5.** Insektizide Zusammensetzungen nach irgendeinem der Ansprüche 1 - 4, in denen <u>Bacillus thuringiensis</u> aus den Donegani-, Kurstaki-, San Diego- und Tenebrionis-Varianten ausgewählt ist.

**6.** Insektizide Zusammensetzungen nach irgendeinem der Ansprüche 1 - 5, in denen die Phospholipide aus Phosphatidylcholin, Phosphatidylethanolamin, Phosphatidylinosit, Phosphatidylglycerin und deren hydrierten, hydroxylierten und ethoxylierten Derivaten ausgewählt sind.

**7.** Insektizide Zusammensetzungen nach irgendeinem der Ansprüche 1 - 5, in denen die Substanz mit einem hohen Phospholipid-Gehalt Soja-Lecithin oder dessen Derivate ist.

**8.** Verwendung einer Zusammensetzung nach irgendeinem der Ansprüche 1 - 7 zur Bekämpfung von Insekten.

## Revendications

**1.** Compositions insecticides comprenant :
(a) une biomasse de Bacillus thuringiensis, ou uniquement sa toxine, et
(b) un ou plusieurs phospholipides ou une substance ayant une forte teneur en phospholipides.

**2.** Compositions insecticides suivant la revendication 1, dans lesquelles le rapport en poids de (a), en substance sèche, à (b) est compris dans la gamme allant de 1/0,2 à 1/5.

**3.** Compositions insecticides suivant les revendications 1 ou 2, contenant de plus, au moins un agent tensioactif choisi parmi les esters d'acides gras ($C_{10}$ à $C_{20}$) avec du glycérol ou du sorbitol éventuellement éthoxylé.

**4.** Composition insecticide suivant la revendication 3, dans laquelle le rapport en poids de la biomasse de Bacillus thuringiensis ou de sa toxine à ces agents tensioactifs est compris dans la gamme allant de 1:0,2 à 1:5.

**5.** Compositions insecticides suivant l'une quelconque des revendications 1 à 4, dans lesquelles Bacillus thuringiensis est choisi parmi les variétés donegani, kurstaki, san diego et tenebrionis.

**6.** Compositions insecticides suivant l'une quelconque des revendications 1 à 5, dans lesquelles les phospholipides sont choisis parmi les suivants: phosphatidylcholine, phosphatidyl-éthanolamine, phosphatidylinositol, phosphatidylglycérol et leurs dérivés hydrogénés, hydroxylés et éthoxylés.

**7.** Compositions insecticides suivant l'une quelconque des revendications 1 à 5, dans lesquelles la substance à haute teneur en phospholipides est la lécithine du soja ou ses dérivés.

**8.** L'utilisation d'une composition suivant l'une quelconque des revendications 1 à 7 pour la lutte contre les insectes.